# EUROPEAN PATENT SPECIFICATION

(11) **EP 3 613 586 B1**
(45) Date of publication and mention of the grant of the patent: **07.12.2022**
(21) Application number: 18787665.1
(22) Date of filing: 17.04.2018
(51) Int. Cl.: B32B 7/06, B32B 27/00, B32B 27/30, H04R 1/00, B32B 3/26, B32B 5/02, B32B 7/12, B32B 15/095, B32B 15/18, B32B 15/20, B32B 27/08, B32B 27/10, B32B 27/28, B32B 27/32, B32B 27/36, B32B 27/40

(54) **LAMINATE AND WOUND BODY**
LAMINAT UND WUNDKÖRPER
STRATIFIÉ ET CORPS ENROULÉ

(30) Priority: 18.04.2017 JP 2017082341
(43) Date of publication of application: 26.02.2020
(73) Proprietor: Nitto Denko Corporation, Ibaraki-shi, Osaka 567-8680 (JP)
(72) Inventor: INOUE, Takeo, Ibaraki-shi Osaka 567-8680 (JP); FUKUSHIMA, Tamao, Ibaraki-shi Osaka 567-8680 (JP)
(74) Representative: Müller-Boré & Partner Patentanwälte PartG mbB
(86) International application number: PCT/JP2018/015919
(87) International publication number: WO 2018/194073

(56) References cited:
- EP-A1- 2 306 751
- EP-A1- 2 351 647
- WO-A1-2010/084912
- WO-A1-2016/009583
- WO-A1-2016/047140
- WO-A1-2016/068112
- JP-A- 2005 271 236
- JP-A- 2007 081 881
- JP-A- 2007 098 628
- JP-A- 2009 148 896
- JP-A- 2018 053 225

## Description

### TECHNICAL FIELD

The present invention relates to a laminate including a resin film, and more specifically to a laminate including a resin film that can function as a waterproof air-permeable membrane and/or a waterproof sound-transmitting membrane.

### BACKGROUND ART

Various housings are often provided with openings for maintaining ventilation between the outside and inside of the housings, and examples of the housings include: a housing enclosing an electronic circuit board such as a vehicle ECU (Electronic Control Unit) and a control board for a solar cell; a housing enclosing an electronic device or components such as a motor, a light source, and a sensor; a housing of a household electric appliance such as an electric toothbrush and an electric shaver; and a housing of an information terminal such as a mobile phone. Maintaining ventilation makes it possible, for example, to eliminate or reduce pressure difference occurring between the inside and outside of the housing. In many cases, the opening is provided with a waterproof air-permeable membrane that prevents water from entering the housing from outside through the opening while maintaining ventilation between the inside and outside of the housing, especially when a product enclosed in the housing is vulnerable to water.

Also, a housing of an electronic device, such as a mobile phone and a tablet computer, having an audio function is provided with an opening to allow sound to be transmitted between an audio part placed in the housing and the outside of the electronic device. The audio part is, for example, a sound emitter such as a speaker and/or a sound receiver such as a microphone. Obviously, entry of water into the housing of the electronic device must be prevented; however, the above-described opening for sound transmission may constitute a route that allows water to enter the housing. Especially for portable electronic devices, the risk of water entry is high because they are often exposed to rain or water used in daily life and because the orientation of the opening cannot be fixed at a specific orientation that allows the avoidance of water (for example, a downward orientation for which rain is less likely to come into the housing). Accordingly, a waterproof sound-transmitting membrane that allows sound to be transmitted between the audio part and the outside of the housing and that prevents water from entering the housing from outside through the opening is placed in such a manner as to close the opening.

Conventionally, the waterproof air-permeable membrane and the waterproof sound-transmitting membrane (hereinafter, these may be collectively described as a "waterproof membrane") are processed into a shape that closes the opening to which they are joined, and are supplied in a state in which an adhesive layer is formed on one principal surface thereof. The waterproof membrane supplied is joined to the opening of the housing by the adhesive layer. The waterproof membrane has a decreased air permeability and sound transmissivity in an area on which the adhesive layer in placed. Thus, the adhesive layer has a predetermined shape that can ensure the air permeability and/or sound transmissivity of the waterproof membrane, typically, a frame shape corresponding to a peripheral region of the waterproof membrane having a shape that closes the opening. The air permeability and/or sound transmissivity of the waterproof membrane is ensured in an area inside the frame of the adhesive layer.

On the waterproof membrane with the adhesive layer formed thereon, a separator (a release film) is disposed in such a manner as to cover the adhesive layer in order to prevent unexpected adhesion at the time of storing and transporting the membrane. The separator is peeled at the time of using the waterproof membrane, and the waterproof membrane is joined to the opening by the adhesive layer exposed on a surface thereof. In a laminate of the waterproof membrane and the separator that sandwich the adhesive layer therebetween, a peel surface formed when the separator is peeled from the waterproof membrane is positioned between the separator and the adhesive layer. A surface of the separator that is in contact with the adhesive layer is often treated with a releasing treatment that increases peelability of the separator from the adhesive layer. Also in the case where the waterproof membrane is supplied as a roll having excellent storage property, transportability, etc., the waterproof membrane is, for the reason mentioned above, wound in a state in which the separator is disposed in such a manner as to cover the adhesive layer.

Patent Literature 1 discloses an air-permeable filter that has a waterproof air-permeable membrane on one principal surface of which an adhesive layer in a predetermined shape and having an opening is formed, and that has a separator disposed in such a manner as to cover the adhesive layer. The adhesive layer exposed when the separator is peeled allows the waterproof air-permeable membrane to be joined to an opening of a housing and to be used as an air-permeable filter.

Patent Literature 2 discloses a water proof membrane comprising an adhesive layer and a release layer. The adhesive layer stays on the membrane after releasing the release layer.

### CITATION LIST

### Patent Literature

Patent Literature 1: JP 2010-000464 A
Patent Literature 2: WO2016/009583 A1

### SUMMARY OF INVENTION

### Technical Problem

According to the air-permeable filter of Patent Literature 1, the method of joining to the opening of the housing is limited to the joining using the adhesive layer that is formed on one principal surface of the waterproof air-permeable membrane and that remains on the principal surface after the separator is peeled. Moreover, the air-permeable filter of Patent Literature 1 can be supplied in a state of being formed plurally on the separator (paragraph 0033), but the shape of the adhesive layer to be used for joining to the opening of the housing is set to a predetermined shape in advance. That is, even in the case (paragraph 0029) where the air-permeable filter is supplied in a strip-like shape or as a roll, that only describes the shape of the separator, and the shape as the waterproof air-permeable membrane and the air-permeable filter is determined and fixed beforehand.

The present invention is intended to provide a laminate that can allow a resin film which can function as a waterproof air-permeable membrane and/or a waterproof sound-transmitting membrane to be supplied in a state of being highly flexible in terms of shape and/or method of joining to an opening of a housing, and further in a state of being in the form of a roll with excellent storage property, transportability, etc.

### Solution to Problem

The present invention provides a laminate including:
a resin film that can function as a waterproof air-permeable membrane and/or a waterproof sound-transmitting membrane; and
a separator, wherein
the resin film and the separator are joined to each other by an adhesive layer, and
a peel surface formed when the separator is peeled from the resin film is positioned between the resin film and the adhesive layer.

In another aspect, the present invention provides a roll of a laminate,
the laminate including: a resin film that can function as a waterproof air-permeable membrane and/or a waterproof sound-transmitting membrane; and a separator, wherein
the resin film and the separator are joined to each other by an adhesive layer, and
a peel surface formed when the separator in the laminate is peeled from the resin film is positioned between the resin film and the adhesive layer.

### Advantageous Effects of Invention

The present invention can provide a laminate that can allow a resin film which can function as a waterproof air-permeable membrane and/or a waterproof sound-transmitting membrane to be supplied in a state of being highly flexible in terms of shape and/or method of joining to an opening of a housing, and further in a state of being in the form of a roll with excellent storage property, transportability, etc.

### BRIEF DESCRIPTION OF DRAWINGS

FIG. 1 is a cross-sectional view schematically showing an example of the laminate of the present invention.
FIG. 2 is an image showing an example of a resin film that the laminate of the present invention may include.
FIG. 3A is an image showing a surface of an example of the resin film that the laminate of the present invention may include.
FIG. 3B is an image showing a cross section of the resin film shown in FIG. 3A.
FIG. 4A is a plan view schematically showing an example of the laminate of the present invention.
FIG. 4B is a cross-sectional view schematically showing a cross section of the laminate shown in FIG. 4A, taken along the line A-A.
FIG. 5 is a schematic diagram showing an example of the roll of the present invention.

### DESCRIPTION OF EMBODIMENTS

A laminate of a first embodiment of the present disclosure is a laminate including: a resin film that can function as a waterproof air-permeable membrane and/or a waterproof sound-transmitting membrane; and a separator. The resin film and the separator are joined to each other by an adhesive layer. A peel surface formed when the separator is peeled from the resin film is positioned between the resin film and the adhesive layer.

In a second embodiment of the present disclosure according to the laminate of the first embodiment, the resin film has a surface density of 60 g/m² or less.

In a third embodiment of the present disclosure according to the laminate of the first embodiment or the second embodiment, the resin film is composed of at least one resin selected from a fluororesin, a polyester resin, a polyimide resin, a polycarbonate resin and a polyolefin resin.

In a fourth embodiment of the present disclosure according to the laminate of any one of the first embodiment to the third embodiment, the resin film has a plurality of through holes that extend through a thickness of the resin film, and the through holes are straight holes that extend through a non-porous substrate structure of the resin film and that have a central axis extending straight.

In a fifth embodiment of the present disclosure according to the laminate of the first embodiment or the second embodiment, the resin film is a polytetrafluoroethylene (hereinafter referred to as "PTFE") porous membrane.

In a sixth embodiment of the present disclosure according to the laminate of any one of the first embodiment to the fifth embodiment, the resin film is a single layer film.

In a seventh embodiment of the present disclosure according to the laminate of any one of the first embodiment to the sixth embodiment, the adhesive layer has an adhesive strength of 3.0 N/25 mm or less against an acrylic plate.

A roll of an eighth embodiment of the present disclosure is a roll of a laminate. The laminate includes: a resin film that can function as a waterproof air-permeable membrane and/or a waterproof sound-transmitting membrane; and a separator. The resin film and the separator are joined to each other by an adhesive layer. A peel surface formed when the separator in the laminate is peeled from the resin film is positioned between the resin film and the adhesive layer.

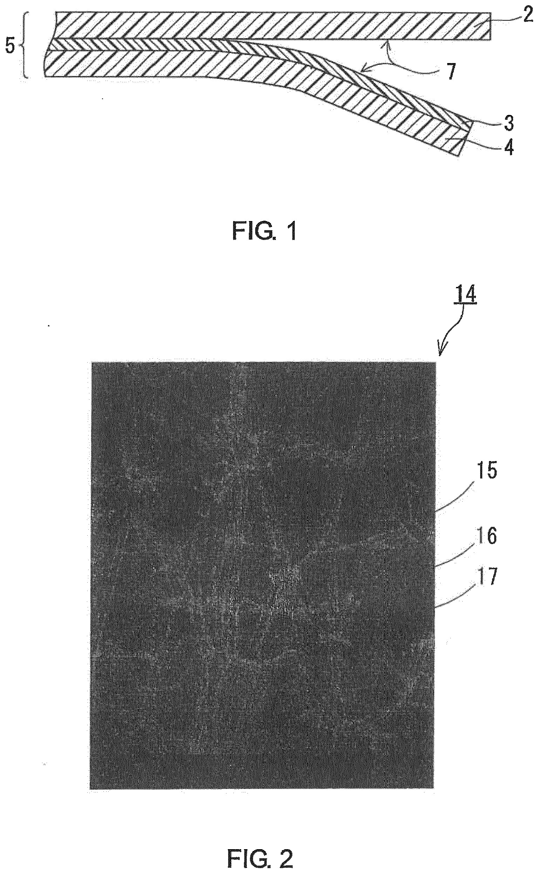

FIG. 1 shows an example of the laminate of the present disclosure. A laminate 5 shown in FIG. 1 includes a resin film 2 and a separator 4. The resin film 2 is a film that can function as a waterproof membrane. Examples of "the film that can function as a waterproof membrane" include a film that turns into a waterproof membrane through a predetermined process such as a shaping process. The resin film 2 and the separator 4 are joined to each other by an adhesive layer 3. In the laminate 5, a peel surface 7 formed when the separator 4 is peeled from the resin film 2 is positioned between the resin film 2 and the adhesive layer 3. That is, in the laminate 5, the adhesive layers 3 is peeled together from the resin film 2 when the separator 4 is peeled, so that the resin film 2 on a surface of which the adhesive layer 3 is not formed is obtained.

The resin film 2 that is supplied by the laminate 5 and that is without the adhesive layer formed on a surface thereof can be joined to an opening of a housing by an arbitrary joining method. That is, the resin film 2 has high flexibility in terms of the method of joining to an opening of a housing. Examples of the joining method include joining by an adhesive layer newly disposed on a surface of the resin film 2, joining by thermal welding, and joining by ultrasonic welding.

The resin film 2 supplied by the laminate 5 can be processed into an arbitrary shape as necessary. That is, the resin film 2 has high flexibility in terms of shape. It should be noted that the "shape" includes "size." This means that the laminate 5 makes it possible to supply the resin film 2 that can function as a waterproof membrane in a state of being highly flexible in terms of shape and/or method of joining to an opening of a housing.

Moreover, the laminate 5 makes it possible to wind the resin film 2 that can function as a waterproof membrane. That is, the laminate 5 allows the resin film 2 to be supplied in the form of the roll.

In addition to the above, the adhesive layer 3 inhibits misalignment between the resin film 2 and the separator 4 at the time of winding. The roll of the laminate 5 can be inhibited from a failure (an abnormal shape of the roll) resulting from tight winding, etc. at the time of winding.

In the case of obtaining a plurality of the resin films 2 from one piece of the laminate 5, it is also possible to choose different joining methods for the resin films 2 obtained. Moreover, in the case of obtaining a plurality of the resin films 2 from one piece of the laminate 5, the resin films 2 obtained may have different shapes. When the resin films 2 are obtained from the laminate 5, a predetermined process, such as a shaping process, may be carried out as necessary.

In recent years, the size of an opening to which the waterproof membrane is joined has been reduced greatly and the size of the waterproof membrane is urged to be reduced accordingly. The reduced-size waterproof membrane has poor handleability when being handled independently. The laminate 5 allows the resin film 2 to be supplied stably and to be supplied also in the form of the roll even in the case where the resin film 2 is a reduced-size waterproof membrane.

The resin film 2 is not limited as long as it is a resin film that can function as a waterproof membrane.

The resin film 2 is composed of, for example, at least one resin selected from a fluororesin, a polyester resin, a polyimide resin, a polycarbonate resin and a polyolefin resin. Examples of the fluororesin include PTFE, an ethylene-tetrafluoroethylene copolymer (ETFE), polyvinylidene fluoride (PVdF), a perfluoroalkoxy fluororesin (PFA) and a tetrafluoroethylene-hexafluoropropylene copolymer (FEP). Examples of the polyester resin include polyethylene terephthalate (PET), polybutylene terephthalate (PBT) and polybutylene naphthalate (PBN). Examples of the polyolefin resin include polyethylene (PE), polypropylene (PP) and ultra high molecular weight polyethylene (UHMWPE). However, the material of the resin film 2 is not limited to these examples. The resin film 2 may contain two resins or more.

The resin film 2 may be a film that has no holes such as a hole connecting both principal surfaces of the resin film 2, and it may also be a film that has one, or two or more holes. An example of the resin film 2 having a plurality of holes is a porous film having a porous substrate structure. Examples of the porous film include a film 14 (see FIG. 2) that has: a network structure composed of a node 15 that is an aggregated portion of a resin and a fibril 16 that is a fine fibrous structure with both ends combined with the node 15; and countless holes 17 among the fibrils 16. The film 14 is typically formed by stretching a resin film that is a precursor. Generally, the film 14 obtained by stretching the resin film that is a precursor is also referred to as a stretched porous membrane. The stretched porous membrane is a PTFE porous membrane, for example. FIG. 2 shows an image of an example of the PTFE porous membrane observed with a scanning electron microscope (SEM). The structure of the resin film 2 is not limited to these examples.

The film 14 has an average pore diameter of, for example, 0.01 to 10 µm, and it may be 0.05 to 3.0 µm and 0.05 to 1.0 µm. The average pore diameter of the film 14 can be measured in compliance with a method prescribed in American Society for Testing and Materials (ASTM) F316-86. A commercially available evaluation apparatus (such as Perm-Porometer available from Porous Materials, Inc) that can make an automatic measurement based on this method may be used for the measurement.

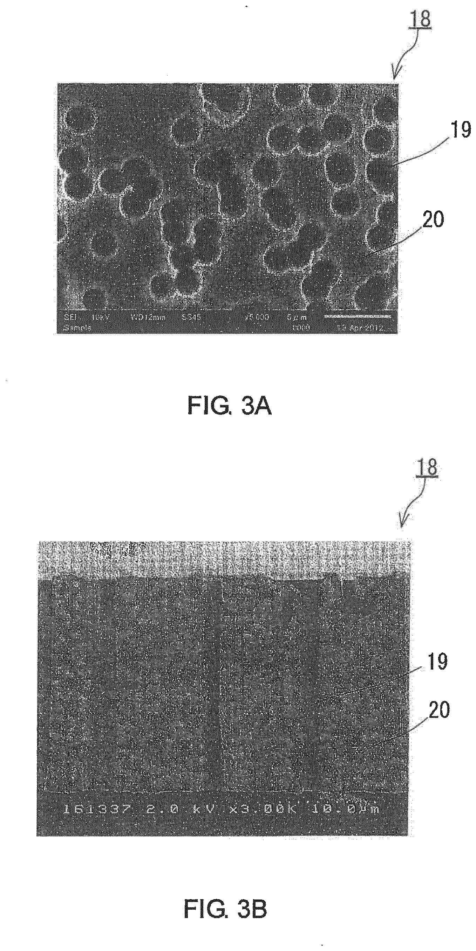

Another example of the resin film 2 having a plurality of holes is a film 18 that has a plurality of through holes 19 extending through a thickness of the film 18 (see FIG. 3A and FIG. 3B). The through holes 19 are straight holes that extend through a non-porous substrate structure 20 of the film and that have a central axis extending straight. The film 18 is typically formed by providing a non-porous resin film, which is a precursor, with the through holes 19 to serve as the holes. The precursor may be a resin film with no holes. The through holes 19 can be formed by ion beam irradiation to the precursor and chemical etching thereto after the irradiation, or laser irradiation to the precursor, for example. FIG. 3A and FIG. 3B each show an image of an example of the film 18 observed with an SEM. FIG. 3A shows a surface and FIG. 3B shows a cross section of the example. In the example shown in FIG. 3A and FIG. 3B, the through holes 19 have a shape, typically a diameter, that is uniform from one principal surface to another principal surface of the film 18. However, the shape of the through holes 19 may change in a thickness direction of the film 18 as long as the through holes 19 have a central axis extending straight.

The diameter of the through holes 19 in the film 18 is, for example, 4.5 to 20 µm, and it may be 5 to 15 µm. The diameter of the through holes 19 can be determined by analyzing an enlarged image of a surface and/or a cross section of the film 18 observed with an SEM, etc.

The film having a hole/holes is not limited to the examples mentioned above.

The film having a hole, particularly a film having a plurality of holes, tends to have a lower strength because of the hole(s). Such a film with a low strength is vulnerable to damage such as rupture and deformation. Also, it tends to break at the time of being wound and cannot be wound independently in many cases. Therefore, there is a significant advantage in providing the laminate 5 that allows the resin film 2 having the hole(s) to be supplied in a state of being highly flexible as mentioned above, and that can be supplied also in the form of the roll.

The resin film 2 may be a single layer film, and it may also be a multilayer film having a plurality of layers.

The resin film 2 may be a film with a low strength. Specifically, it may be a film having a tensile strength of 30 N/10 mm or less. A film with a low strength is vulnerable to damage such as rupture and deformation. In addition, a resin film is applied mainly with a tensile stress at the time of being wound. Therefore, in the case of being wound independently, a resin film with a low tensile strength is unable to bear the tensile stress and it tends to break. Therefore, there is a significant advantage in providing the laminate 5 that allows the resin film 2 having a tensile strength of 30 N/10 mm or less to be supplied in a state of being highly flexible as mentioned above, and that can be supplied also in the form of the roll.

The resin film 2 may have a tensile strength of 25 N/10 mm or less, 20 N/10 mm or less, 15 N/10 mm or less, 10 N/10 mm or less, and further 5 N/10 mm or less. The lower limit of the tensile strength is not limited and it is 0.1 N/10 mm or more, for example. In the case where the resin film 2 has a tensile strength that is anisotropic, a maximum tensile strength that the resin film 2 exhibits in an in-plane direction may fall in these ranges. In the case where the resin film 2 is strip-shaped, the film may have, in a longitudinal direction, a strength falling in these ranges.

The resin film 2 may have a tensile strength exceeding 30 N/10 mm.

The resin film 2 has a surface density of, for example, 60 g/m² or less, and it may be 30 g/m² or less, 20 g/m² or less, 15 g/m² or less, and further 10 g/m² or less. The lower limit of the surface density is not limited. It is 1.0 g/m² or more, for example, and may be 2.0 g/m² or more. While the resin film 2 having a surface density in these ranges can achieve, for example, a high air permeability and excellent sound transmission characteristics (to be specific, a small insertion loss, for example), it normally has a strength lower than that of a resin film having a higher surface density. Therefore, there is a significant advantage in providing the laminate 5 that allows the resin film 2 having a surface density in these ranges to be supplied in a state of being highly flexible as mentioned above, and that can be supplied also in the form of the roll. The surface density of the resin film 2 can be calculated by dividing a weight of the film by an area (an area of a principal surface) of the film.

The resin film 2 having the hole(s) has a porosity of, for example, 20% or more, and it may be 50% or more, 65% or more, and further 80% or more. The upper limit of porosity is not limited. It is 95% or less, for example, and it may be 90% or less. While the resin film 2 having a porosity in these ranges can achieve, for example, a high air permeability and excellent sound transmission characteristics, it normally has a strength lower than those of a resin film having a lower porosity and a resin film having no holes. Therefore, there is a significant advantage in providing the laminate 5 that allows the resin film 2 having a porosity in these ranges to be supplied in a state of being highly flexible as mentioned above, and that can be supplied also in the form of the roll.

The method for evaluating the porosity can be chosen according to the structure of the resin film 2. For example, the porosity of the film 14 can be calculated by subtracting the ratio of a density (an apparent density) of the film 14 to a specific gravity (a true specific gravity) of the resin(s) composing the film 14 from 100 (%). The porosity of the film 18 can be determined by analyzing an enlarged image of a surface and/or a cross section of the film 18 with an SEM, etc. In the case where the shape of the through holes 19 from the one principal surface to the other principal surface of the film 18 is uniform, the ratio of the areas of openings (the opening area ratio) of the through holes 19 per unit area at one of the principal surfaces of the film 18 may be defined as the porosity of the film 18.

A hole density of the through holes 19 in the resin film 18 is, for example, 1 × 10³ holes/cm² to 1 × 10⁹ holes/cm², and it may be 1 × 10⁴ holes/cm² to 1 × 10⁹ holes/cm², and 1 × 10⁵ holes/cm² to 5 × 10⁸ holes/cm². While the film 18 having a hole density of the through holes 19 falling in these ranges can achieve, for example, high air permeability and excellent sound transmission characteristics, it has a strength lower than that of the film 18 having a lower hole density and a resin film having no holes. Therefore, there is a significant advantage in providing the laminate 5 that allows the film 18 having a hole density of the through holes 19 falling in these ranges to be supplied in a state of being highly flexible as mentioned above, and that can be supplied also in the form of the roll. The hole density of the through holes 19 in the film 18 can be determined by analyzing an enlarged image of a surface of the film 18 with an SEM, etc.

The resin film 2 has a cohesion Pc of, for example, 10 N/25 mm or less, and it may be 5.0 N/25 mm or less, 2.0 N/25 mm or less, and further 1.0 N/25 mm or less. The lower limit of the cohesion Pc is not limited. It is, for example, a value equal to or exceeding 0.1 N/25 mm, and may be a value equal to or exceeding 2.0 N/25 mm, and further a value equal to or exceeding 3.0 N/25 mm. The resin film 2 having a cohesion Pc in these ranges has a strength lower than that of a resin film having a higher cohesion Pc. Therefore, there is a significant advantage in providing the laminate 5 that allows the resin film 2 having a cohesion Pc in these ranges to be supplied in a state of being highly flexible as mentioned above, and that can be supplied also in the form of the roll.

The resin film 2 has a thickness of, for example, 1 to 200 µm, and it may be 5 to 150 µm and 10 to 100 µm.

The resin film 2 that can function as a waterproof air-permeable membrane has an air permeability in a thickness direction. The resin film 2 that can function as a waterproof sound-transmitting membrane may or may not have an air permeability in the thickness direction. This is because sound can be transmitted also by vibration of the membrane. The air permeability of the resin film 2 can be controlled by, for example, the average pore diameter, the diameter of the through holes, the porosity and the hole density mentioned above.

The resin film 2 can be classified as a non-air-permeable film, a slightly-air-permeable film and an air-permeable film according to the level of the air permeability in the thickness direction. Specifically, the non-air-permeable film is a film having, in the thickness direction, an air permeability higher than 10,000 seconds/100 mL in terms of degree of air permeation (hereinafter referred to as "Gurley air permeability") measured in compliance with Method B (Gurley method) of air permeability measurement prescribed in Japanese Industrial Standards (hereinafter referred to as "JIS") L 1096. The slightly-air-permeable film is a film having, in the thickness direction, an air permeability in the range of 20 to 10,000 seconds/100 mL as expressed in terms of the Gurley air permeability. The air-permeable film is a film having, in the thickness direction, an air permeability of less than 20 seconds/100 mL as expressed in terms of the Gurley air permeability.

Even in the case where the resin film 2 has a size that fails to satisfy the size (approximately 50 mm × 50 mm) of a specimen used in the above-mentioned Gurley method, it is possible to evaluate the Gurley air permeability by using a measuring jig. An example of the measuring jig is a polycarbonate disk that has a thickness of 2 mm and a diameter of 47 mm and that is provided with a through hole (having a circular cross section with a diameter of 1 mm or 2 mm) at a center thereof. The measurement of the Gurley air permeability using this measuring jig can be carried out as follows.

A resin film to be evaluated is fixed on one surface of the jig in such a manner as to cover an opening of the through hole of the measuring jig. The fixation is carried out in such a manner that when the Gurley air permeability is being measured, air permeates only through the opening and an effective test region (a region that overlaps with the opening when viewed from a direction perpendicular to a principal surface of the fixed resin film) of the resin film to be evaluated as well as a fixed portion does not inhibit the permeation of the air through the effective test region of the resin film. To fix the resin film, there can be used a double-sided adhesive tape provided with an air passing port that has a shape identical to that of the opening and that is punched at a central part of the adhesive tape. The double-sided adhesive tape may be disposed between the measuring jig and the resin film in such a manner that a circumference of the air passing port is aligned with a circumference of the opening. Next, the measuring jig with the resin film fixed thereon is set on a Gurley air permeability tester in such a manner that a surface on which the resin film is fixed is on a downstream of an airstream at the time of the measurement, and a time t1 that 100 mL of air spends permeating the resin film is measured. Next, the time t1 measured is converted to a value t per 642 [mm²], which is an effective test area prescribed in Method B (Gurley method) of air permeability measurement in JIS L 1096, by a formula t = {(t1) × (an area [mm²] of the effective test region of the resin film) /642 [mm²]}, so that the converted value t thus obtained can be defined as the Gurley air permeability of the resin film. In the case where the above-mentioned disk is used as the measuring jig, the area of the effective test region of the resin film is an area of the cross section of the through hole. It has been confirmed that the Gurley air permeability measured, without the measuring jig, on a film that satisfies the above-mentioned size of the specimen is sufficiently equal to the Gurley air permeability measured on a piece of the film with the measuring jig. That is, it has been confirmed that use of the measuring jig has substantially no impact on the Gurley air permeability measurements.

The resin film 2 that can function as a waterproof air-permeable membrane has an air permeability, in the thickness direction, of, for example, 20 to 10,000 seconds/100 mL as expressed in terms of the Gurley air permeability, and it may be 20 to 1000 seconds/100 mL and 10 to 100 seconds/100 mL.

The resin film 2 that can function as a waterproof sound-transmitting membrane has an air permeability, in the thickness direction, of, for example, 0.1 to 300 seconds/100 mL as expressed in terms of the Gurley air permeability, and it may be 0.1 to 100 seconds/100 mL and 0.1 to 20 seconds/100 mL.

Since the resin film 2 that is an air permeable film has in itself an air permeation path that brings the above-mentioned air permeability, this resin film 2 tends to have a strength lower than those of a slightly-air-permeable film and a non-air-permeable film that each have a thickness and/or a surface density equivalent to those of the resin film 2. Therefore, there is a significant advantage in providing the laminate 5 that allows the resin film 2 that is an air permeable film to be supplied in a state of being highly flexible as mentioned above, and that can be supplied also in the form of the roll.

The resin film 2 that can function as a waterproof sound-transmitting membrane has acoustic characteristics (sound transmissivity) of, for example, 5 dB or less as expressed in terms of an average value of insertion loss in a frequency region from 100 to 5000 Hz, and it may be 3 dB or less, and further 2 dB or less. The insertion loss is a value reflecting a change in sound pressure (a sound pressure loss) at the time when sound permeates through the sound-transmitting membrane. A frequency of 100 to 5000 Hz corresponds to a frequency region in which human has an acute hearing ability.

The resin film 2 has a water entry pressure of, for example, 3 kPa or higher, and it may be 10 kPa or higher, 100 kPa or higher, and further 1000 kPa or higher. The water entry pressure of the resin film 2 can be measured in compliance with Method A (low hydraulic pressure method) or Method B (high hydraulic pressure method) of water penetration test prescribed in JIS L 1092, using a measuring jig, as follows.

An example of the measuring jig is a stainless steel disk that has a diameter of 47 mm and that is provided, at a center thereof, with a through hole (having a circular cross section) having a diameter of 1 mm. This disk has a thickness that prevents the disk from being deformed by a hydraulic pressure to be applied at the time of measuring the water entry pressure. The measurement of the water entry pressure using the measuring jig can be carried out as follows.

A resin film to be evaluated is fixed on one surface of the jig in such a manner as to cover an opening of the through hole of the measuring jig. The fixation is carried out in such a manner that no water leaks from a fixed portion of the film when the water entry pressure is being measured. To fix the resin film, there can be used a double-sided adhesive tape provided with an air passing port that has a shape identical to that of the opening and that is punched at a central part of the adhesive tape. The double-sided adhesive tape may be disposed between the measuring jig and the resin film in such a manner that a circumference of the air passing port is aligned with a circumference of the opening. Next, the measuring jig with the resin film fixed thereon is set on a test apparatus in such a manner that a surface opposite to a surface on which the resin film is fixed is a surface on which a hydraulic pressure is applied at the time of measurement. Then, the water entry pressure is measured in compliance with Method A (low hydraulic pressure method) or Method B (high hydraulic pressure method) of water penetration test prescribed in JIS L 1092. It should be noted that the water entry pressure is measured based on the hydraulic pressure at the time when water comes out from one spot of a principal surface of the resin film. The water entry pressure measured can be defined as the water entry pressure of the resin film. As the test apparatus, an apparatus that has a structure equivalent to the structure of a water penetration test apparatus illustrated in JIS L 1092 and that has a specimen mounting structure that allows the above-mentioned measuring jig to be set thereon.

Examples of the slightly-air-permeable film and the non-air-permeable film include the resin film 2 obtained by rolling a two-or-more-layer laminate of a stretched porous membrane and/or a resin film (such as a cast film and a cutting film) that is a precursor, and stretching the laminate before and/or after the rolling as necessary. The resin film 2 may have an orientation of the resin(s) caused by the rolling. The orientation of the resin(s) can be evaluated by an X-ray diffraction technique (XRD), for example.

More specific examples of the resin film 2 include: a PTFE porous membrane that is one type of a stretched porous membrane; a resin film that is composed of a non-porous substrate film composed of a material such as PTFE, PET, polycarbonate and polyimide and that has a plurality of through holes that are straight holes extending through the substrate film; and a rolled film obtained by rolling a two-or-more-layer laminate of a stretched porous membrane (such as a PTFE porous membrane) and/or a resin film (such as a PTFE film) that is a precursor, and stretching the laminate before and/or after the rolling as necessary.

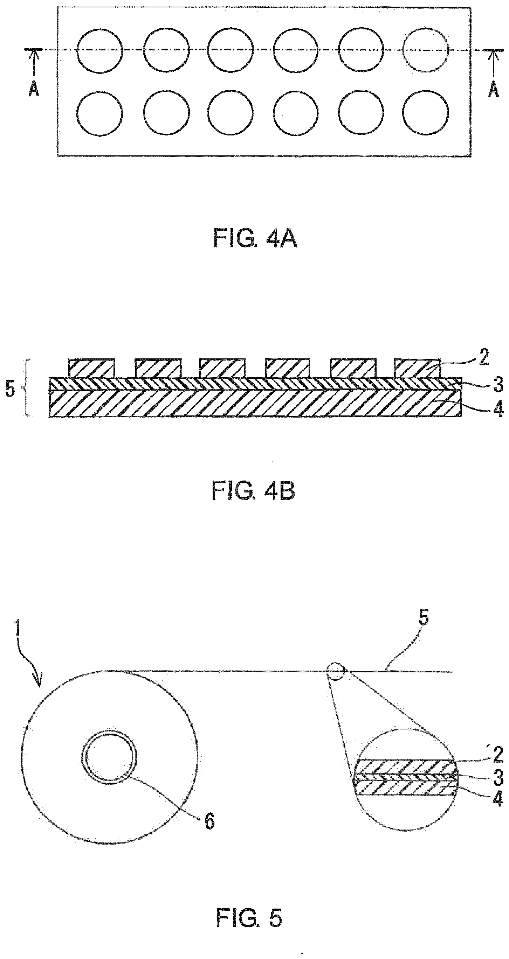

The resin film 2 has a shape that is, for example, a polygon such as a rectangle and a square, an ellipse and a circle, and it may be an indefinite shape. The shape of the resin film 2 may be a shape (a shape of a waterproof membrane) in which the resin film 2 is used as a waterproof membrane. The shape of the resin film 2 may be strip-shaped. The resin film 2 may have a shape and a size identical to those of the separator 4. In the case where the resin film 2 is supplied as the roll (in the case where the laminate 5 is supplied), the separator 4 is strip-shaped and the resin film 2 may be also strip-shaped. In the laminate 5 shown in FIG. 1, the resin film 2 has a rectangular shape or is strip-shaped. FIG. 4A and FIG. 4B show an example of the laminate 5 in the case where the resin film 2 has a circular shape. FIG. 4A is a plan view of the laminate 5 when viewed from a direction perpendicular to principal surfaces of the resin film 2 and the separator 4. FIG. 4B is a cross-sectional view showing a cross section of the laminate 5 shown in FIG. 4A, taken along the line A-A. Also in the laminate 5 shown in FIG. 4A and FIG. 4B, the peel surface formed when the separator 4 is peeled from the resin film 2 is positioned between the resin film 2 and the adhesive layer 3. In the laminate 5 shown in FIG. 4A and FIG. 4B, the separator 4 has a rectangular shape or is strip-shaped. The adhesive layer 3 in this laminate 5 has a shape different from that of the resin film 2. The shape of the adhesive layer 3 is different from that of the resin film 2 and is, for example, a rectangular shape or strip-shaped, and it may be a shape identical to that of the separator 4. The shape of the resin film 2 is not limited to these examples.

The resin film 2 supplied by the laminate 5 may be used as a waterproof membrane directly after the separator 4 and the adhesive layer 3 are peeled therefrom, or may be used as a waterproof membrane after being subjected to a predetermined process such as a shaping process. For example, in the case where the resin film 2 is in the form of a waterproof membrane in the laminate 5 shown in FIG. 4A and FIG. 4B, the resin film 2 supplied by the laminate 5 can be used as a waterproof membrane directly after the separator 4 and the adhesive layer 3 are peeled therefrom.

The resin film 2 may be treated with a liquid-repellent treatment such as a water-repellent treatment and/or an oil-repellent treatment. The resin film 2 may be treated with an arbitrary treatment such as a coloring treatment like a dyeing treatment.

Examples of an adhesive contained in the adhesive layer 3 include a silicone adhesive containing a silicone resin as a main component, an acrylic adhesive containing an acrylic resin as a main component, and a urethane adhesive containing a urethane resin as a main component. Among them, the urethane adhesive has high wettability and has low contamination property with regard to chemical contamination against an adherend. The urethane adhesive also has characteristics such that it can be formed into an adhesive layer with low adhesiveness relatively easily and it has an adhesive strength that is unlikely to increase with the lapse of time. Therefore, the adhesive layer 3 preferably contains the urethane adhesive, and more preferably, it is composed of the urethane adhesive. The adhesive layer 3 containing the adhesive having an adhesive strength that is unlikely to increase with the lapse of time can prevent an adhesive residue from being left on the resin film 2 at the time when the separator 4 is being peeled, for example. An adhesive composition contained in the adhesive layer 3 is not limited to these examples.

In the present description, "a main component" means a component having the largest content in a composition. The content of the main component in a composition is, for example, 50 wt% or more, and it may be 70 wt% or more, 80 wt% or more, 90 wt% or more, and further 95 wt% or more.

The urethane resin that the urethane adhesive contains as the main component is preferably a resin obtained by hardening a composition containing: one, or two or more polyols each having two or more, preferably three or more, and more preferably 3 or more and 6 or less hydroxy groups; and a polyfunctional isocyanate compound. The urethane adhesive containing this urethane resin makes it possible to form the adhesive layer 3 with low adhesiveness more easily.

The adhesive layer 3 has an adhesive strength of, for example, 3.0 N/25 mm or less as expressed in terms of an adhesive strength P_{A} against an acrylic plate, and it may be 2.0 N/25 mm or less, and further 0.1 N/25 mm or less. The lower limit of the adhesive strength P_{A} of the adhesive layer 3 is, for example, 0.01 N/25 mm or more, and it may be 0.04 N/25 mm or more. In the case where the adhesive layer 3 has the adhesive strength P_{A} in these ranges, an adhesive residue left on the resin film 2 at the time when the separator 4 is being peeled can be inhibited more reliably as well as the peelability of the adhesive layer 3 from the resin film 2 can be improved, and a failure (a cohesive failure) of the resin film 2 at the time when the separator 4 is being peeled can be inhibited.

In the case where the adhesive layer 3 has the adhesive strength P_{A} in the above-mentioned ranges, the following effects can be expected, for example: even when the resin film 2 has a low strength, the resin film 2 is inhibited, more reliably, from being damaged at the time of being stored, transported, etc., and from being broken at the time of being wound; a failure of the roll resulting from tight winding, etc. at the time of winding can be inhibited from occurring more reliably; and the amount of the adhesive to adhere to a processing blade can be reduced when the laminate 5 or the resin film 2 is subjected to a shaping process with a slit blade, etc.

A ratio P_{A}/P_{C} between the cohesion Pc of the resin film 2 and the adhesive strength P_{A} of the adhesive layer 3 against an acrylic plate is preferably 0.001 or more and less than 1. The lower limit of the ratio P_{A}/P_{C} is preferably 0.001 or more, more preferably 0.01 or more, and further preferably 0.05 or more. The upper limit of the ratio P_{A}/P_{C} is preferably less than 1, more preferably 0.8 or less, and further preferably 0.6 or less. The ratio P_{A}/P_{C} in these ranges can further inhibit the failure (the cohesive failure) of the resin film 2 at the time when the separator 4 is being peeled.

The adhesive layer 3 has a thickness of, for example, 1 to 200 µm, and it may be 3 to 100 µm and 3 to 50 µm.

The adhesive layer 3 is formed, for example, on the entirety of one principal surface of the separator 4, on the entirety of one principal surface of the separator 4 except a peripheral region of the one principal surface, or the entirety of one principal surface of the separator 4 except end regions, in a width direction, of the one principal surface. The adhesive layer 3 may have a shape different from that of the resin film 2. It should be noted that the shape of the adhesive layer 3 is not limited to these examples.

The separator 4 that is a release film is composed of, for example: a resin such as a polyester resin, a polyolefin resin and a polycarbonate resin; paper; nonwoven fabric; and metal such as aluminum and stainless steel. However, the material of the separator 4 is not limited to these examples. Preferably, the separator 4 is composed of a resin, and more preferably, it is composed of a polyester resin. Specific examples of the polyester resin and the polyolefin resin are as mentioned above. The separator 4 may be composed of two or more materials.

The separator 4 may be a film having no holes such as a hole connecting both principal surfaces of the separator 4, and it may also be a film that has one, or two or more holes. Preferably, the separator 4 is a film having no holes at least in an area on which the adhesive layer 3 is formed.

The separator 4 may have a thickness of, for example, 10 to 200 µm, and it may be 15 to 100 µm and 20 to 100 µm.

The separator 4 may have a tensile strength higher than that of the resin film 2 to which the separator 4 is joined to. The separator 4 has a tensile strength exceeding, for example, 30 N/10 mm, and it may be 40 N/10 mm or more, 50 N/10 mm or more, 75 N/10 mm or more, 100 N/10 mm or more, and further 200 N/10 mm or more. The upper limit of the tensile strength is not limited. However, since use of the separator 4 having an excessively high tensile strength is likely to cause a failure at the time of winding and makes the winding difficult, the upper limit of the tensile strength is 500 N/10 mm or less, for example. In the case where the separator 4 has a tensile strength that is anisotropic, a maximum tensile strength that the separator 4 exhibits in an in-plane direction may fall in these ranges, and it exceeds 30 N/10 mm, for example. In the case where the separator 4 is strip-shaped, the separator 4 may have, in a longitudinal direction, a strength falling in these ranges, and it exceeds 30 N/10 mm, for example.

The separator 4 may be a single layer film, and it may also be a multilayer film having a plurality of layers.

The separator 4 may be treated with an arbitrary treatment. The treatment is an antistatic treatment, for example. The antistatic treatment can inhibit static electricity from being generated at the time when the separator 4 is being peeled, and can inhibit the resin film 2 from being damaged due to the charge of the static electricity generated. There is a significant advantage in inhibiting the generation of the static electricity in the case where the resin film 2 is composed of a resin, such as PET, that is easily charged with electricity.

The laminate 5 may include a layer and/or a member other than the resin film 2, the adhesive layer 3 and the separator 4.

FIG. 5 shows an example of the roll of the present disclosure. A roll 1 shown in FIG. 5 is a roll of the laminate 5. The laminate 5 is wound around a winding core 6. In the laminate 5 delivered from the roll 1, the peel surface 7 formed when the separator 4 is peeled from the resin film 2 is positioned between the resin film 2 and the adhesive layer 3.

The separator 4 and the laminate 5 in the roll 1 each are strip-shaped. The adhesive layer 3 in the roll 1 may be strip-shaped. The resin film 2 in the roll 1 may have the shapes described in the explanation about the laminate 5.

As the winding core 6, a publicly known winding core used for a roll of a resin film can be used.

The strip-shaped laminate 5 in the roll 1 has, in a longitudinal direction, a length of, for example, 50 m or more, and it may be 100 m or more and 200 m or more. The upper limit of the length in the longitudinal direction is 500 m, for example.

The roll 1 is excellent in terms of the storage property and transportability of the resin film 2.

The resin film 2 may have a better handling property and a higher strength when it is in the laminate 5 before the separator 4 is peeled therefrom than when it is independent. Therefore, the laminate 5 can provide effects such that: the process of shaping the resin film 2 becomes easy; a conveying tension and/or a conveying speed of the resin film 2 can be set high; and deformation, wrinkles, slack, etc. of the resin film 2 when it is being subjected to the shaping process and/or being conveyed can be inhibited from occurring. The inhibition of the occurrence of deformation, wrinkles, slack, etc. at the time of shaping process makes it possible to carry out the shaping process of the resin film 2 more precisely. Also, since the electrical charge of the resin film 2 is inhibited by a functional group that the adhesive contained in the adhesive layer 3 has, occurrence of a damage to the resin film 2, such that an unexpected hole is formed in the resin film 2, resulting from the electrical charge can be inhibited. There is a significant advantage in inhibiting the electrical charge in the case where the resin film 2 is composed of a resin, such as PET, that is easily charged with electricity.

The resin film 2 can be subjected to an arbitrary process regardless of whether it is before or after the separator 4 is peeled therefrom.

For example, the resin film 2 may be subjected to the shaping process before the separator 4 is peeled therefrom, that is, when it is in the laminate 5. In this case: the presence of the adhesive layer 3 and the separator 4 inhibits deformation, wrinkles, slack, etc. from occurring on the resin film 2, making it possible to improve the precision of the shaping process on the resin film 2; and/or the resin film 2 in a predetermined shape and without the adhesive layer can be obtained by peeling the separator 4 from the resin film 2 after the shaping process. Also, the resin film 2 may be subjected to the shaping process after the separator 4 is peeled therefrom. The resin film 2 to be subjected to the shaping process has a shape of, for example, a polygon such as a rectangle and a square, or is strip-shaped, and the resin film 2 may have a shape and a size identical to those of the separator 4. The resin film 2 after being subjected to the shaping process may have an arbitrary shape like a polygon such as a rectangle and a square, an ellipse, a circle, and an indefinite shape. The resin film 2 after being subjected to the shaping process may be used as a waterproof air-permeable membrane and/or a waterproof sound-transmitting membrane.

Moreover, an additional adhesive layer may be provided on a surface (at least one of the principal surfaces) of the resin film 2, for example. The resin film 2 to be provided with the additional adhesive layer may be the film that has been subjected to the shaping process. Providing the additional adhesive layer makes it possible, for example, to form a waterproof air-permeable membrane and/or a waterproof sound-transmitting membrane that can be joined to another member by the adhesive layer. The additional adhesive layer may have a predetermined shape, and it may be, for example, a frame shape corresponding to the shape of a peripheral region of the resin film 2 when viewed from a direction perpendicular to the principal surface of the resin film 2. An additional separator may be disposed in such a manner as to cover the additional adhesive layer. The additional separator to be disposed may have a predetermined shape such as a shape identical to that of the resin film 2. In the case of the resin film 2 before the separator 4 is peeled therefrom, the resin film 2 can be provided with the additional adhesive layer on the principal surface opposite to the principal surface with which the adhesive layer 3 is in contact. In the case of the resin film 2 after the separator 4 is peeled therefrom, the resin film 2 can be provided with the additional adhesive layer on the principal surface with which the adhesive layer 3 was in contact and/or on the principal surface opposite to that surface. The resin film 2 may be subjected to both of the shaping process and the process of providing the additional adhesive layer. In this case, the order of carrying out these processes is arbitrary.

The laminate 5 can be formed, for example, by stacking the separator 4 on a surface of which the adhesive layer 3 is formed and the resin film 2 in such a manner that the resin film 2 is in contact with the adhesive layer 3. After the stacking, a pressure may be applied thereto in the thickness direction of the separator 4, the adhesive layer 3 and the resin film 2 with a compression bonding roll, etc. However, the method of manufacturing the laminate 5 is not limited to this example.

The separator 4 on a surface of which the adhesive layer 3 is formed can be formed, for example, by disposing an adhesive composition on the surface of the separator 4 by a publicly known applying technique. The separator 4 on a surface of which the adhesive layer 3 is formed may be formed, for example, by transferring the adhesive layer 3 formed on a transfer sheet to the surface of the separator 4.

The roll 1 can be formed by winding the laminate 5.

### EXAMPLES

Hereinafter, the present invention is described further in detail with reference to examples. The present invention is not limited to the following examples.

First, the methods for evaluating the resin film, the adhesive layer and the separator produced or prepared in the examples, and the laminate and the roll produced in the examples are described.

### [Thickness]

The resin film, the separator, and the laminate of these (in which the adhesive layer is further included in Examples 1 to 8) were measured for thickness with a digital upright gauge R1-205 (with a contact point having a diameter φ of 5 mm, at a measuring force of 1.1 N or less, available from OZAKI MFG. CO., LTD.). The measurement temperature was 25±2°C and the measurement humidity was 65±20%RH.

### [Tensile strength]

The resin film and the separator were measured for tensile strength (tensile breaking strength) in compliance with a method prescribed in JIS K 6251: 2010. More specifically, a tensile test was carried out, in a longitudinal direction (an MD direction), on a specimen that was No. 1 dumbbell shape or No. 2 dumbbell shape (with a width of 10 mm at a parallel part) under measurement conditions that the measurement temperature was 25°C, the tensile rate was 100 mm/minute and the initial distance between grips was 10 mm, using a desktop precision universal tester Autograph AGS-X (available from SHIMADZU CORPORATION) as a tensile testing machine. A maximum tensile force recorded by the time the specimen was broken was defined as the tensile strength (unit: N/10 mm) of the specimen.

### [Cohesive force]

The resin film was measured for cohesive force by a method shown below referring to a method for measuring 180° peeling adhesive strength prescribed in JIS Z 0237:2009.

### <Preparation of specimen>

First, the resin film to be measured was cut into a rectangular shape (100 mm in length × 25 mm in width). Next, two sheets of double-sided tape (No. 5610 available from Nitto Denko Corporation) having the same shape as that of the cut resin film were prepared and bonded respectively to one surface and another surface of the cut resin film in such a manner that the four sides of each of the sheets were aligned with the four sides of the resin film. Next, two rectangular PET films which were 150 mm in length × 25 mm in width (with a thickness of 25 µm) were prepared and bonded respectively to the one surface and the other surface of the resin film by the above-mentioned double-sided tape. The two PET films were bonded in such a manner that both ends, in a width direction, of each of the PET films were aligned with both ends, in a width direction, of the resin film, and both ends, in a longitudinal direction, of each of the PET films fail to overlap with the resin film and the double-sided tape when viewed from a direction perpendicular to principal surfaces of the PET films. It should be noted that in both of the PET films, each of the free ends that had not been bonded to the double-sided tape had a length (25 mm, for example), in a longitudinal direction, that allowed the grips of the tensile testing machine to hold the PET film stably at the time of the tensile test described below. Next, a compression bonding roller at a load of 19.6 N was rolled back and forth one time on a resulting laminate of the PET film, the double-sided tape, the resin film, the double-sided tape and the PET film in such a manner that the laminate was applied with a compression bonding force in a thickness direction so as to obtain a specimen for measuring the cohesive force of the resin film. Thereafter, the specimen was left for at least 30 minutes before the following tensile test was started.

### <Measurement of the cohesive force of the resin film by a tensile test>

Next, the desktop precision universal tester Autograph AGS-X (available from SHIMADZU CORPORATION) was prepared as a tensile testing machine, the free end of one of the PET films at one end, in a longitudinal direction, of the specimen was fixed to an upper grip of the tensile testing machine, and the free end of the other PET film at the other end, in a longitudinal direction, of the specimen was fixed to a lower grip of the tensile testing machine. Next, a tensile test in which the lower end of the other PET film was pulled downward was carried out under the conditions that the measurement temperature was 25°C, the measurement humidity was 60%RH and the tensile rate was 300 mm/minute so as to cause a cohesive failure on the resin film. While this test was being carried out, the resin film was applied with forces respectively on one principal surface and another principal surface thereof, the forces being in directions 180° different from each other. After the PET film started to be displaced by the cohesive failure of the resin film, the values of the stress were continually measured and recorded, ignoring the stress between the grips measured over the initial 25 mm displacement, over the subsequent 50 mm displacement and the average of the recorded values was defined as the cohesive force (unit: N/25mm) of the resin film.

### [Adhesive strength]

The adhesive layer was measured for adhesive strength as below in compliance with a method for measuring 180° peeling adhesive strength prescribed in JIS Z 0237:2009.

First, the separator on a surface of which the adhesive layer to be measured was formed was cut into a rectangular shape (120 mm in length × 20 mm in width) so as to obtain a specimen. Next, under the atmosphere that the temperature was 23°C and the humidity was 65%RH, a compression bonding roller with a mass of 2 kg was rolled back and forth one time on the specimen so that the specimen was bonded to an acrylic plate that was a test plate. A compression bonding force of 19.6 N was applied by the compression bonding roller. In 30 minutes after the bonding, a 180° peeling test in which the separator was peeled from the acrylic plate was carried out under the measuring conditions that the measurement temperature was 23°C, the measurement humidity was 65%RH and the tensile rate was 300 mm/minute by using the desktop precision universal tester Autograph AGS-X (available from SHIMADZU CORPORATION) as a tensile testing machine to measure a 180° peeling adhesive strength. The 180° peeling adhesive strength obtained was defined as the adhesive strength of the adhesive layer against the acrylic plate.

### [Air permeability]

The air permeability, in the thickness direction, of the resin film before the separator was joined to form the laminate and the air permeability, in the thickness direction, of the resin film after the separator was peeled from the formed laminate were each determined as a degree of air permeation (a Gurley air permeability) in compliance with Method B (Gurley method) of air permeability measurement prescribed in JIS L 1096.

### [Adhesive residue]

The presence or absence of an adhesive (the presence or absence of an adhesive residue) that was derived from the adhesive layer and remained on a surface of the resin film obtained by peeling the separator from the laminate was evaluated by comparing the air permeability (the Gurley air permeability), in the thickness direction, of the resin film before the separator was joined with the air permeability (the Gurley air permeability), in the thickness direction, of the resin film after the separator was peeled. Specifically, it was evaluated that "the adhesive residue was present" when the numerical value of the latter is 1.5 times or greater the numerical value of the former, and it was evaluated that "the adhesive residue was absent" when the numerical value of the latter is less than 1.5 times the numerical value of the former.

### [Presence or absence of failure occurrence at the time of winding]

When tight winding occurred at the time of winding the laminate of the resin film and the separator, it was evaluated that a failure occurrence was present, and it was evaluated that a failure occurrence was absent when no tight winding occurred.

### (Production Example 1: Fabrication of resin film A)

100 parts by weight of PTFE fine powder (POLYFLON PTFE F-104 available from DAIKIN INDUSTRIES,LTD) and 20 parts by weight of n-dodecane (available from Japan Energy Corporation) as a forming aid were mixed uniformly, and the resulting mixture was compressed by using a cylinder and then ram-extruded to form a sheet-like mixture. Next, the sheet-like mixture formed was rolled through a pair of metal rolls to have a thickness of 0.2 mm, and further heated at 150°C to dry and remove the forming aid so as to form a strip-shaped PTFE sheet-formed body. Next, the sheet-formed body thus formed was stretched in a longitudinal direction (a rolling direction) at a stretching temperature of 260°C and at a stretching ratio of 15 so as to obtain a strip-shaped PTFE porous membrane (unsintered).

Next, the PTFE porous membrane obtained was immersed for several seconds in a coloring solution that is a mixed solution of 20 parts by weight of a black dye (SP BLACK 91-L, an ethanol dilute solution with a concentration of 25 weight%, available from ORIENT CHEMICAL INDUSTRIES CO., LTD.) and 80 parts by weight of ethanol (with a purity of 95%) that is a solvent for the dye. Then, the whole was heated at 100°C to dry and remove the solvent so as to obtain a strip-shaped PTFE porous membrane dyed in black. Next, the PTFE porous membrane obtained was immersed in a liquid-repellent agent for several seconds, and then the whole was heated at 100°C to dry and remove the solvent so as to obtain a strip-shaped PTFE porous membrane treated with the liquid-repellent treatment.

The liquid-repellent agent used for the liquid-repellent treatment was prepared as follows. 100 g of a fluorine compound that has a linear fluoroalkyl group and that is represented by a chemical formula CH₂ = CHCOOCH₂CH₂C₆F₁₃, 0.1 g of azobisisobutyronitrile as a polymerization initiator, and 300 g of a solvent (FS thinner available from Shin-Etsu Chemical Co., Ltd.) were put into a flask equipped with a nitrogen feed pipe, a thermometer and a stirrer, and addition polymerization of the above-mentioned compound was allowed to proceed at 70°C for 16 hours while nitrogen gas was fed into the flask and the content was stirred continuously so as to obtain 80 g of a fluorine-containing polymer (with a number-average molecular weight of 100,000). Next, the polymer obtained was diluted with a diluent (FS thinner available from Shin-Etsu Chemical Co., Ltd.) to have a concentration of 3.0 weight%. Thus, the liquid-repellent agent was prepared.

Subsequently, the PTFE porous membrane treated with the liquid-repellent treatment was stretched in a width direction at a stretching temperature of 150°C and at a stretching ratio of 10, and further sintered at 360°C, which is a temperature exceeding the melting point of PTFE, for 10 minutes so as to obtain a strip-shaped PTFE porous membrane (a resin film A) that was the resin film 2.

### (Production Example 2: Fabrication of resin film B)

100 parts by weight of PTFE fine powder (POLYFLON PTFE F-104 available from DAIKIN INDUSTRIES,LTD) and 20 parts by weight of n-dodecane (available from Japan Energy Corporation) as a forming aid were mixed uniformly, and the resulting mixture was compressed by using a cylinder and then ram-extruded to form a sheet-like mixture. Next, the sheet-like mixture formed was rolled through a pair of metal rolls to have a thickness of 0.2 mm, and further heated at 150°C to remove the forming aid so as to form a strip-shaped PTFE sheet-formed body.

Next, the sheet-formed body thus formed was stretched in a longitudinal direction at a stretching temperature of 260°C and at a stretching ratio of 1.5, and then stretched in a width direction at a stretching temperature of 150°C and at a stretching ratio of 6.5 so as to obtain a strip-shaped PTFE porous membrane (unsintered). Next, the PTFE porous membrane obtained was sintered at 360°C for 10 minutes so as to obtain a strip-shaped PTFE porous membrane (a resin film B) that was the resin film 2.

### (Production Example 3: Fabrication of resin film C)

1 parts by weight of a fluorine surfactant (Megafac F-142D available from DIC Corporation) was added to a PTFE dispersion (in which PTFE particles had a concentration of 40 weight% and an average particle diameter of 0.2 µm, and 6 parts by weight of a nonionic surfactant was contained with respect to 100 parts by weight of PTFE) with respect to 100 parts by weight of PTFE. Next, a strip-shaped polyimide film (with a thickness of 125 µm) was immersed in the PTFE dispersion and pulled up to form a coating membrane of the PTFE dispersion on the polyimide film. At this time, a measuring bar was used to control a thickness of the coating membrane to 20 µm. Next, the whole was heated at 100°C for 1 minute, and then heated at 390°C for 1 minute so that water contained in the coating membrane was evaporated and removed, and the remaining PTFE particles were bonded to each other to form a PTFE membrane. Next, the above-mentioned immersion and heating were repeated two more times, and then the PTFE membrane was peeled from the polyimide film to obtain a strip-shaped PTFE cast film (with a thickness of 25 µm).

Next, the cast film obtained was stretched, with a tenter, in a width direction at a stretching temperature of 250°C and at a stretching ratio of 3.0, and then rolled in a longitudinal direction at a rolling temperature of 100°C and at a rolling ratio of 2.5 so as to obtain a strip-shaped PTFE porous membrane (a resin film C) that was the resin film 2.

### (Production Example 4: Fabrication of resin film D)

As a resin film D that was the resin film 2, there was prepared a commercially-available film (OxyDisc available from Oxyphen AG) that was a PET film having a non-porous substrate structure, and that had a plurality of through holes that extended through a thickness of the resin film and that were straight holes. The film prepared had a thickness of 13 µm. The through holes had a diameter of 10 µm. The film had a hole density of 3.8 × 10⁵ pieces/cm².

The resin films A to D each was a film that can function as a waterproof air-permeable membrane and/or a waterproof sound-transmitting membrane.

### (Production Example 5: Fabrication of a separator A on a surface of which the adhesive layer is formed)

70 parts by weight of polyol (SANNIX PP4000 with a number-average molecular weight of 4000, available from Sanyo Chemical Industries, Ltd) containing two hydroxy groups per molecule, 20 parts by weight of polyol (SANNIX GP-1500 with a number-average molecular weight of 1500, available from Sanyo Chemical Industries, Ltd) containing three hydroxy groups per molecule, 10 parts by weight of polyol (EDP-1100 with a number-average molecular weight of 1100, available from ADEKA Corporation) containing four hydroxy groups per molecule, 40 parts by weight of a trimethylolpropane/tolylenediisocyanate trimer adduct (Coronate L available from Tosoh Corporation) as a polyfunctional isocyanate compound, 0.04 parts by weight of a catalyst (Nacem Ferric Iron available from Nihon Kagaku Sangyo Co., Ltd.), and 266 parts by weight of ethyl acetate as a diluent solvent were mixed and stirred with a disperser to obtain a urethane adhesive composition.

Next, the adhesive composition obtained was applied, with a fountain roll, to one principal surface of a PET film (Lumirror S10 with a thickness of 38 µm, available from Toray Industries, Inc.) that was the separator 4 so as to have a thickness of 12 µm after being dried, and cured under the conditions of heating at 130°C for 2 minutes to be dried. Thus, a separator A that was the separator 4 and had the adhesive layer 3 formed on the surface thereof was obtained.

### (Production Example 6: Fabrication of a separator B on a surface of which the adhesive layer is formed)

70 parts by weight of polyol (PREMINOL S4006 with a number-average molecular weight of 5500, available from AGC Inc.) containing two hydroxy groups per molecule, 30 parts by weight of polyol (EDP-1100 with a number-average molecular weight of 1100, available from ADEKA Corporation) containing four hydroxy groups per molecule, 30 parts by weight of a trimethylolpropane/tolylenediisocyanate trimer adduct (Coronate L available from Tosoh Corporation) as a polyfunctional isocyanate compound, 0.10 parts by weight of a catalyst (Nacem Ferric Iron available from Nihon Kagaku Sangyo Co., Ltd.), and 266 parts by weight of ethyl acetate as a diluent solvent were mixed and stirred with a disperser to obtain a urethane adhesive composition.

Next, the adhesive composition obtained was applied, with a fountain roll, to one principal surface of a PET film (Lumirror S10 with a thickness of 38 µm, available from Toray Industries, Inc.) that was the separator 4 so as to have a thickness of 12 µm after being dried, and cured under the conditions of heating at 130°C for 2 minutes to be dried. Thus, a separator B that was the separator 4 and had the adhesive layer 3 formed on the surface thereof was obtained.

### (Production Example 7: Preparation of a separator C)

As a separator on a surface of which no adhesive layer was formed, a paper separator (KPY-11-2 with a thickness of 170 µm, available from LINTEC Corporation) was prepared.

### (Example 1)

The resin film A produced in Production Example 1 and the separator A produced in Production Example 5 were stacked in such a manner that their ends in a width direction were aligned with each other and the adhesive layer formed on a surface of the separator A was in contact with the resin film A, and further joined to each other by being passed through a pair of compression bonding rollers to obtain a laminate. At the time of being passed through the compression bonding roller, the laminate of the resin film A and the separator A was applied with a compression bonding force of 19.6 N. Next, the laminate obtained was wound around a winding core to obtain a roll.

### (Example 2)

The resin film A produced in Production Example 1 and the separator B produced in Production Example 6 were stacked in such a manner that their ends in a width direction were aligned with each other and the adhesive layer formed on a surface of the separator B was in contact with the resin film A, and further joined to each other by being passed through a pair of compression bonding rollers to obtain a laminate. At the time of being passed through the compression bonding roller, the laminate of the resin film A and the separator B was applied with a compression bonding force of 19.6 N. Next, the laminate obtained was wound around a winding core to obtain a roll.

### (Example 3)

The resin film B produced in Production Example 2 and the separator A produced in Production Example 5 were stacked in such a manner that their ends in a width direction were aligned with each other and the adhesive layer formed on a surface of the separator A was in contact with the resin film B, and further joined to each other by being passed through a pair of compression bonding rollers to obtain a laminate. At the time of being passed through the compression bonding roller, the laminate of the resin film B and the separator A was applied with a compression bonding force of 19.6 N. Next, the laminate obtained was wound around a winding core to obtain a roll.

### (Example 4)

The resin film B produced in Production Example 2 and the separator B produced in Production Example 6 were stacked in such a manner that their ends in a width direction were aligned with each other and the adhesive layer formed on a surface of the separator B was in contact with the resin film B, and further joined to each other by being passed through a pair of compression bonding rollers to obtain a laminate. At the time of being passed through the compression bonding roller, the laminate of the resin film B and the separator B was applied with a compression bonding force of 19.6 N. Next, the laminate obtained was wound around a winding core to obtain a roll.

### (Example 5)

The resin film C produced in Production Example 3 and the separator A produced in Production Example 5 were stacked in such a manner that their ends in a width direction were aligned with each other and the adhesive layer formed on a surface of the separator A was in contact with the resin film C, and further joined to each other by being passed through a pair of compression bonding rollers to obtain a laminate. At the time of being passed through the compression bonding roller, the laminate of the resin film C and the separator A was applied with a compression bonding force of 19.6 N. Next, the laminate obtained was wound around a winding core to obtain a roll.

### (Example 6)

The resin film C produced in Production Example 3 and the separator B produced in Production Example 6 were stacked in such a manner that their ends in a width direction were aligned with each other and the adhesive layer formed on a surface of the separator B was in contact with the resin film C, and further joined to each other by being passed through a pair of compression bonding rollers to obtain a laminate. At the time of being passed through the compression bonding roller, the laminate of the resin film C and the separator B was applied with a compression bonding force of 19.6 N. Next, the laminate obtained was wound around a winding core to obtain a roll.

### (Example 7)

The resin film D prepared in Production Example 4 and the separator A produced in Production Example 5 were stacked in such a manner that their ends in a width direction were aligned with each other and the adhesive layer formed on a surface of the separator A was in contact with the resin film D, and further joined to each other by being passed through a pair of compression bonding rollers to obtain a laminate. At the time of being passed through the compression bonding roller, the laminate of the resin film D and the separator A was applied with a compression bonding force of 19.6 N. Next, the laminate obtained was wound around a winding core to obtain a roll.

### (Example 8)

The resin film D prepared in Production Example 4 and the separator B produced in Production Example 6 were stacked in such a manner that their ends in a width direction were aligned with each other and the adhesive layer formed on a surface of the separator B was in contact with the resin film D, and further joined to each other by being passed through a pair of compression bonding rollers to obtain a laminate. At the time of being passed through the compression bonding roller, the laminate of the resin film D and the separator B was applied with a compression bonding force of 19.6 N. Next, the laminate obtained was wound around a winding core to obtain a roll.

### (Comparative Example 1)

The resin film A produced in Production Example 1 and the separator C prepared in Production Example 7 were stacked in such a manner that their ends in a width direction were aligned with each other, and further joined to each other by being passed through a pair of compression bonding rollers to obtain a laminate. At the time of being passed through the compression bonding roller, the laminate of the resin film A and the separator C was applied with a compression bonding force of 19.6 N. Although the laminate obtained was tried to be wound around a winding core to obtain a roll, the roll was failed to be obtained because failures due to tight winding occurred frequently.

### (Comparative Example 2)

The resin film B produced in Production Example 2 and the separator C prepared in Production Example 7 were stacked in such a manner that their ends in a width direction were aligned with each other, and further joined to each other by being passed through a pair of compression bonding rollers to obtain a laminate. At the time of being passed through the compression bonding roller, the laminate of the resin film B and the separator C was applied with a compression bonding force of 19.6 N. Although the laminate obtained was tried to be wound around a winding core to obtain a roll, the roll was failed to be obtained because failures due to tight winding occurred frequently.

Table 1 below shows the characteristics of the resin films A to D. Table 2 below shows the characteristics of the separators A to C. Table 3 below shows the characteristics of the adhesive layers produced in Production Examples 5 and 6. Table 4 below shows the evaluation results of Examples and Comparative Examples.

**[Table 1]**

| | Resin film A | Resin film B | Resin film C | Resin film D |
|---|---|---|---|---|
| Material | PTFE | PTFE | PTFE | PET |
| Thickness (µm) | 10 | 80 | 5 | 13 |
| Gurley air permeability (seconds/100 mL) | 0.4 | 11 | 20 | 0.2 |
| Tensile strength (N/10 mm) | 2.9 | 16.2 | 4.2 | 2.6 |
| Cohesive force (N/25 mm) | 0.3 | 1.5 | 0.8 | 4.3 |

**[Table 2]**

| | Separator A | Separator B | Separator C |
|---|---|---|---|
| Thickness (µm) | 38 | 38 | 170 |
| Tensile strength (N/10 mm) | 40.4 | 40.4 | 58.7 |

**[Table 3]**

| | Production Example 5 | Production Example 6 |
|---|---|---|
| Thickness (µm) | 12 | 12 |
| Adhesive strength (N/25 mm) | 0.04 | 0.09 |

**[Table 4]**

| | Examples | | | | | | | | Comparative Examples | |
|---|---|---|---|---|---|---|---|---|---|---|
| | 1 | 2 | 3 | 4 | 5 | 6 | 7 | 8 | 1 | 2 |
| Resin film | A | A | B | B | C | C | D | D | A | B |
| Separator | A | B | A | B | A | B | A | B | C | C |
| Thickness of laminate (µm) | 60 | 60 | 130 | 130 | 55 | 55 | 63 | 63 | 180 | 250 |
| Gurley air permeability (seconds/ 100 mL) | 0.4 | 0.4 | 11 | 11 | 20 | 20 | 0.2 | 0.2 | - | |
| Adhesive resid ue | Absent | Absent | Absent | Absent | Absent | Absent | Absent | Absent | - | - |
| Occurrence of failure | Absent | Absent | Absent | Absent | Absent | Absent | Absent | Absent | Present | Present |

As shown in Table 4, in each of Examples 1 to 8, the resin film that can function as a waterproof air-permeable membrane and/or a waterproof sound-transmitting membrane was able to be supplied, as a strip-shaped body on a surface of which the adhesive layer was not formed, in a state of being highly flexible in terms of shape and method of joining to an opening of a housing, and the resin film was able to be supplied also in the form of the roll. Moreover, when the separator was peeled from the laminate produced in Examples 1 to 8, no adhesive residue was observed on the surface of the resin film, and the resin film after the separator was peeled therefrom still maintained the air permeability, in the thickness direction, that it had had before the separator was joined to the resin film via the adhesive layer.

The embodiments disclosed in this specification are to be considered in all respects as illustrative and not limiting. The scope of the present invention is indicated by the appended claims rather than by the foregoing description, and all changes which come within the meaning and range of equivalency of the claims are intended to be embraced therein.

### INDUSTRIAL APPLICABILITY

A resin film supplied by the laminate or the roll of the present invention can be used as a waterproof air-permeable membrane and/or a waterproof sound-transmitting membrane.

### [Description of Notations]

1 Roll
2 Resin film
3 Adhesive layer
4 Separator
5 Laminate
6 Winding core
7 Peel surface
14 Resin film
15 Node
16 Fibril
17 Hole
18 Resin film
19 Through hole
20 Substrate structure

## Claims

1. A laminate comprising:
a resin film that can function as a waterproof air-permeable membrane and/or a waterproof sound-transmitting membrane; and
a separator, wherein
the resin film and the separator are joined to each other by an adhesive layer, and
a peel surface formed when the separator is peeled from the resin film is positioned between the resin film and the adhesive layer.

2. The laminate according to claim 1, wherein the resin film has a surface density of 60 g/m² or less.

3. The laminate according to claim 1 or 2, wherein the resin film is composed of at least one resin selected from a fluororesin, a polyester resin, a polyimide resin, a polycarbonate resin and a polyolefin resin.

4. The laminate according to any one of claims 1 to 3, wherein
the resin film has a plurality of through holes that extend through a thickness of the resin film, and
the through holes are straight holes that extend through a non-porous substrate structure of the resin film and that have a central axis extending straight.

5. The laminate according to claim 1 or 2, wherein the resin film is a polytetrafluoroethylene porous membrane.

6. The laminate according to any one of claims 1 to 5, wherein the resin film is a single layer film.

7. The laminate according to any one of claims 1 to 6, wherein the adhesive layer has an adhesive strength of 3.0 N/25 mm or less against an acrylic plate, wherein the adhesive strength is determined in compliance with a method for measuring 180° peeling adhesive strength prescribed in JIS Z 0237:2009.

8. A roll of a laminate, wherein the laminate is the laminate according to claim 1.

## Patentansprüche

1. Laminat, umfassend:
einen Harzfilm, der als wasserdichte luftdurchlässige Membran und/oder als wasserdichte schalldurchlässige Membran fungieren kann; und
einen Separator, wobei
der Harzfilm und der Separator durch eine Haftmittelschicht miteinander verbunden sind, und
eine Abziehfläche, die gebildet wird, wenn der Separator von dem Harzfilm abgezogen wird, zwischen dem Harzfilm und der Haftmittelschicht angeordnet ist.

2. Laminat nach Anspruch 1, wobei der Harzfilm eine Oberflächendichte von 60 g/m² oder weniger aufweist.

3. Laminat nach Anspruch 1 oder 2, wobei der Harzfilm aus mindestens einem Harz, ausgewählt aus einem Fluorharz, einem Polyesterharz, einem Polyimidharz, einem Polycarbonatharz und einem Polyolefinharz, zusammengesetzt ist.

4. Laminat nach einem der Ansprüche 1 bis 3, wobei
der Harzfilm eine Mehrzahl von Durchgangslöchern aufweist, die sich durch eine Dicke des Harzfilms erstrecken, und
die Durchgangslöcher gerade Löcher sind, die sich durch eine nicht-poröse Substratstruktur des Harzfilms erstrecken und eine gerade Mittelachse aufweisen.

5. Laminat nach Anspruch 1 oder 2, wobei der Harzfilm eine poröse Polytetrafluorethylenmembran ist.

6. Laminat nach einem der Ansprüche 1 bis 5, wobei der Harzfilm ein Einschichtfilm ist.

7. Laminat nach einem der Ansprüche 1 bis 6, wobei die Haftmittelschicht eine Haftkraft von 3,0 N/25 mm oder weniger gegen eine Acrylplatte aufweist, wobei die Haftkraft in Übereinstimmung mit einem in JIS Z 0237:2009 beschriebenen Verfahren zur Messung der 180°-Abziehhaftkraft bestimmt wird.

8. Rolle eines Laminats, wobei das Laminat das Laminat nach Anspruch 1 ist.

## Revendications

1. Stratifié comprenant :
un film de résine qui peut fonctionner en tant que membrane étanche à l'eau et
perméable à l'air et/ou membrane étanche à l'eau et transmettant le son ; et
un séparateur, dans lequel
le film de résine et le séparateur sont joints l'un à l'autre par une couche adhésive, et
une surface à effeuiller formée quand le séparateur est effeuillé du film de résine, est située entre le film de résine et la couche adhésive.

2. Stratifié selon la revendication 1, dans lequel le film de résine présente une densité de surface de 60 g/m² ou moins.

3. Stratifié selon la revendication 1 ou 2, dans lequel le film de résine est composé d'au moins une résine sélectionnée parmi une fluororésine, une résine de polyester, une résine de polyimide, une résine de polycarbonate et une résine de polyoléfine.

4. Stratifié selon l'une quelconque des revendications 1 à 3, dans lequel
le film de résine présente une pluralité de trous traversants qui s'étendent à travers l'épaisseur du film de résine, et
les trous traversants sont des trous droits qui s'étendent à travers une structure formant substrat non poreux du film de résine et qui ont un axe central à extension droite.

5. Stratifié selon la revendication 1 ou 2, dans lequel le film de résine est une membrane poreuse de polytétrafluoroéthylène.

6. Stratifié selon l'une quelconque des revendications 1 à 5, dans lequel le film de résine est un film monocouche.

7. Stratifié selon l'une quelconque des revendications 1 à 6, dans lequel la couche adhésive a un pouvoir adhésif de 3,0 N/25 mm ou moins contre une plaque acrylique, dans lequel le pouvoir adhésif est déterminé conformément à une méthode pour mesurer un pouvoir adhésif d'effeuillement à 180° prescrit dans la norme JIS Z 0237:2009.

8. Rouleau de stratifié, dans lequel le stratifié est le stratifié selon la revendication 1.
